# EUROPEAN PATENT APPLICATION

(11) **EP 3 933 667 A1**
(43) Date of publication of application: **05.01.2022**
(21) Application number: 20183523.8
(22) Date of filing: 01.07.2020
(51) Int. Cl.: G06K 9/00, B60R 21/015, B60N 2/00, B60N 2/28, B60R 21/01

(54) **PROCESS FOR CONFIGURING A VEHICLE AIRBAG MODULE AND VEHICLE AIRBAG SYSTEM**

(71) Applicant: Valeo Comfort and Driving Assistance, 94046 Créteil Cedex (FR)
(72) Inventor: ERAQI, Hesham, 94046 Créteil CEDEX (FR); HONER, Jens, 94046 Créteil CEDEX (FR)
(74) Representative: Delplanque, Arnaud

(57) **Abstract**

The invention relates to a process for configuring a vehicle (1) airbag module (13) comprising:
- an implementation of an algorithm for classifying an occupation of a seat (2) of the vehicle based on at least one sensor (8) output value,
- an emission of a message comprising information about the result of the classification,
- a possible correction of the result of the classification by user input,
- a configuration of the airbag module (13) either according to the result of the classification or according to the corrected result of the classification,
- a training of the algorithm based on the at least one sensor (8) output value and on the correction.

The invention also relates to a vehicle airbag system.

## Description

### TECHNICAL FIELD OF THE INVENTION

The invention relates to the technical field of automotive vehicles, and more precisely to drive assistance systems.

More precisely the invention relates to a process for configuring a vehicle airbag module and a vehicle airbag system.

### BACKGROUND INFORMATION AND PRIOR ART

Usually, the operation modes of the airbag systems are designed for adult humans and are not suitable for child restraining systems (well known by the man skilled in the art under the acronym "CRS"). Therefore, in order to avoid injuries caused by the airbag to the child in case of an accident, the presence of a CRS in a vehicle require the user of the vehicle to manually change the airbag system settings, for instance by disabling the vehicle airbag module corresponding to the seat of the vehicle on which the CRS is on, or by selecting an airbag system configuration adapted to CRS. This operation is time consuming.

Some vehicle allows to automatically change the airbag configuration. However, in order to trigger the different operation modes of the airbag system, the system shall be able to classify each configuration, and particularly to recognize a CRS configuration with and without a child in it.

Some approaches apply camera systems in combination with image processing algorithms. However, it is very difficult to precisely define said algorithm since algorithms are defined years before the launch of the vehicles on the market and the design of CRS change quite frequently. Therefore, such systems may misclassify the CRS configuration and select the wrong airbag system configuration which may be dangerous for the child. These systems are currently not reliable.

Periodical service updates exist but are annoying for the user of the vehicle since they may be time consuming. Moreover, service updates require an updated dataset that need to be regularly maintained by a team of professionals. This may lead to a greater cost of the service.

### SUMMARY OF THE INVENTION

One object of the invention is to provide a solution to the above-mentioned problem by providing a vehicle airbag system and a process for configuring an airbag system of a vehicle which are reliable and simple of use.

According to an aspect of the invention, it is provided a process for configuring a vehicle airbag module comprising:
- an implementation of an algorithm for classifying an occupation of a seat of the vehicle based on at least one sensor output value,
- an emission of a message, i.e. for instance a display of a visual message or a reproduction of an audio message, comprising information about the result of the classification,
- a possible correction of the result of the classification by user input,
- a configuration of the airbag module either according to the result of the classification or according to the corrected result of the classification,
- a training of the algorithm based on the at least one sensor output value and on the correction.

Thanks to the invention, it is possible to increase the accuracy and reliability of the classification at each use of the airbag system, and this automatically. The invention thus makes it possible to avoid manual configuration of the airbag system and to avoid periodical service updates.

According to an embodiment, the process comprises sending the at least one sensor output value and the correction to a remote server, said training being implemented on said remote server.

The process may comprise a remote update of the algorithm by the remote server.

The process may comprise remote updates of algorithms of airbag modules of at least another vehicle.

Thanks to these features, a larger set of training data (sensor output or correction) is available for each vehicle. The accuracy of the classification may thus be improved more efficiently and is therefore less dependent on the frequency of use of the vehicle.

Said possible correction may comprise the reception of a vocal command.

This is advantageous since it allows the driver to keep its hands free. The driver security is therefore improved.

Said message may be an audio message or a visual message.

An audio message allow the river to remain focus on the road; a visual message is more efficient in case of a noisy vehicle and may remain active in order for the driver to watch it at the more appropriate moment, for instance at a red light.

The sensor output value may comprise an output value of at least one sensor chosen among: an image capture apparatus, a weight sensor, a seatbelt sensor, a time-of-flight camera or a millimetre-wave radar sensor.

The classification may comprise the classification of a child restraining system on the seat.

According to another aspect, it is provided a vehicle airbag system comprising an airbag module and
- a classification unit comprising at least one sensor and a computing unit configured to implement an algorithm to classify an occupation of a seat of the vehicle based on an output value of the at least one sensor,
- a message output unit configured to emit a message comprising information about the result of the classification,
- a command input unit configured to receive a correction command for correcting the result of the classification,
said system being configured to select a configuration for the airbag module either according to the result of the classification or according to the corrected result of the classification, and to train the classification algorithm based on the at least one sensor output value and on the correction.

According to an embodiment, the system comprises a remote server configured to train the detection algorithm, the system being configured to send the at least one sensor output value and the correction to the remote server.

The system may be configured to update algorithm of airbag systems of at least another vehicle with said training.

The system may be configured to correct said result based on a vocal command.

The command input unit may be a vocal command input unit.

The at least one sensor may be chosen among: an image capture apparatus, a weight sensor, a seatbelt sensor, a time-of-flight camera or a millimetre-wave radar sensor.

The system may be advantageously configured to classify a child restraining system on the seat.

### DETAILED DESCRIPTION OF EXAMPLE(S)

The following description with reference to the accompanying drawings will make it clear what the invention consists of and how it can be achieved. The invention is not limited to the embodiments illustrated in the drawings. Accordingly, it should be understood that where features mentioned in the claims are followed by reference signs, such signs are included solely for the purpose of enhancing the intelligibility of the claims and are in no way limiting on the scope of the claims.

In the accompanying drawings:
- Figure 1 shows a partial view of the interior of a vehicle comprising an airbag system according to an embodiment of the invention,
- Figure 2 shows a flowchart illustrating a process for configuring the airbag system of figure 1 according to an embodiment of the invention,
- Figure 3 shows a partial view of the vehicle of figure 1, comprising an airbag system according to another embodiment of the invention,
- Figure 4 shows a flowchart illustrating a process for configuring an airbag system of figure 3 according to an embodiment of the invention.

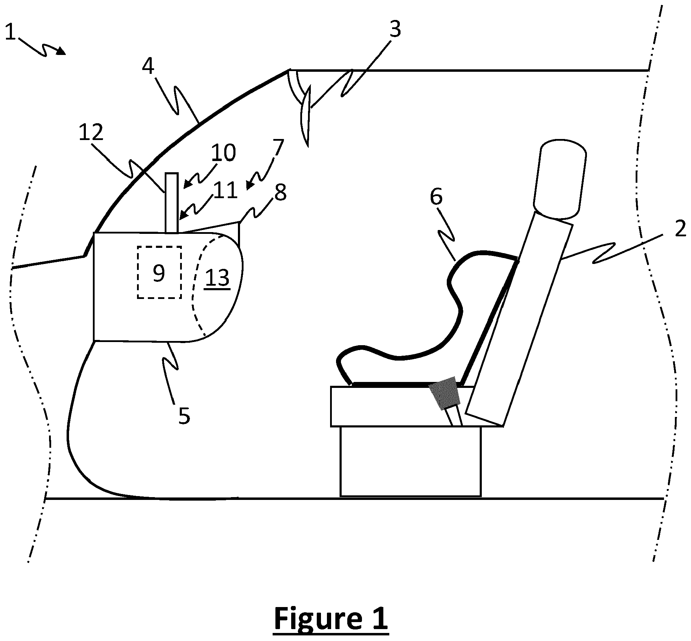

The front part of the motor vehicle 1 shown in figure 1 comprises the front passenger seat 2 as seen by the driver of the vehicle. In this embodiment, the motor vehicle 1 is a car.

The vehicle 1 comprises an interior rear-view mirror 3, a windscreen 4, a casing 5 made in the extension of the driver's dashboard (not shown), and a child seat 6 placed on the front passenger seat 12.

The vehicle 1 is equipped with an airbag system comprising an airbag module 13, a classification unit 7 comprising a sensor 8 and a computing unit 9, a command input unit 10 and a message output unit 11. In this embodiment, the sensor 8 is an image capture device, here a camera, and the computing unit 9 comprises for instance a microprocessor and a memory. The airbag module 13 comprises typically one ore several airbags, one or more corresponding pressurized gas capsule and a trigger system configured to inflate one or several airbags with the appropriate capsule.

In this embodiment, the vehicle comprises a screen 12, for instance here a touch screen, arranged on the driver's dashboard so as to be seen by the driver. The screen 12 is configured to display a user interface, or human-machine interface, comprising the command input unit 10, for instance here a virtual keyboard, and the message output unit 11, here a message display area configured to display visual messages, for instance text messages.

The computing unit 9 is placed in the casing 5 and the image capture device 8 is partially placed in the casing. The airbag module 13 is placed in an openable portion of the casing 5.

More precisely, the image capture device 8 is partially positioned in the casing 5 so as to be directed towards the front passenger seat 2, so that the images captured by the image capture device 8 include at least the front passenger seat and any object or person placed on it.

It should be noted that although the different elements are shown in a same plane in the figure, they may be in practice in different planes. For instance, the screen 12 faces the area between the driver's and the front passenger seat and the airbag module 13 and the image capture device 8 face the front passenger seat.

The image capture device may be of any kind, may be configured to take photos and/or videos and may comprise one or several image photosensors in order for instance to capture stereoscopic images.

The computing unit 9 is electrically connected to the image capture device 8, for instance via a bus cable, and is configured to receive and to process images captured by the image capture device 8. More precisely, the computing unit 9 is configured to implement an algorithm for classifying an occupation of the front passenger seat 12, for instance by determining whether the front passenger seat 12 is occupied by the child seat 6, by an adult or is not occupied, whether the child seat 6 face the windscreen 4 or the front seat 12, whether the child seat 6 is empty or not, and to emit a message comprising an information about the result of the classification via the message output unit 11.

The algorithm comprises in this case an image processing algorithm implementing a shape detection, for instance.

The computing unit 9 is also configured to receive commands via the command input unit 10. For instance here, the commands may comprise a correction of the result of the classification, and the virtual keyboard may comprise a virtual key for each of the above-mentioned configuration of the front passenger seat.

The algorithm is configured to select a configuration for the airbag module 13 according to the result of the detection or, if a correction command has been entered via the input command unit, according to the corrected result of the classification.

The selection may comprise a deactivation of the airbag module or a selection of one or several specific airbags among a plurality of airbags. For instance, if the child seat faces the windshield 4, the algorithm deactivates the airbag module 13 in order to avoid injuring the child. If the child seat 6 faces the front passenger seat 12, the algorithm selects an appropriate airbag. If the algorithm detects an adult on the front seat 12, it selects another appropriate airbag.

As it will be seen thereafter, the algorithm is also configured to learn from the commands receive via the command input.

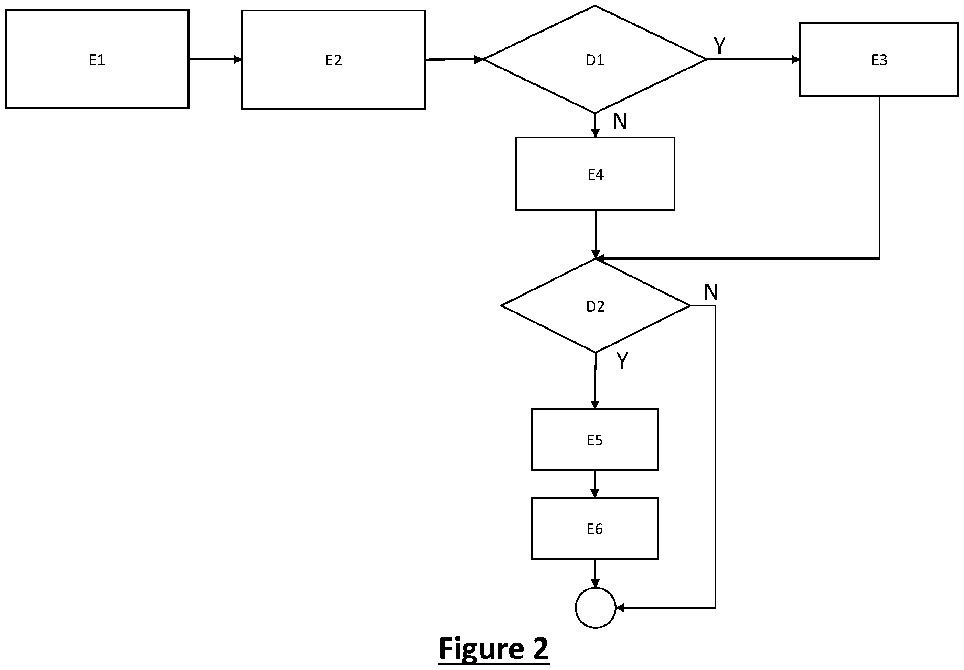

Figure 2 is a flowchart illustrating a process for configuring the vehicle airbag system according to the invention.

On this flowchart, rectangles typically represent a step of the process, diamond represent a decision, the letter N represent a negative choice concerning a decision and the letter Y represent a positive choice. The circle represents the end of the process.

In this example, the front passenger seat 12 is in the configuration shown in figure 1, a configuration in which the front passenger seat 12 is occupied with the child seat 6 facing the windscreen 4 of the vehicle 1. We consider in addition in the present example that a child is sitting in the child seat 6.

During an initial step E1, the image capture device 8 captures an image of the front seat 12 and the algorithm implemented by the computing unit 9 processes the captured image and classifies the front seat configuration thanks to this processing.

During a following step E2, the computing unit 9 send the result of the classification to the message output unit 11. Here, a text message appears on the touchscreen 12 mentioning: "Presence of an empty child seat facing the windscreen". This result does not match the real configuration.

Then in this case, the user enters a correction command via the command input unit 10. For instance, the user selects the right configuration by touching the appropriate virtual key on the virtual keyboard.

The system detects if a user input happened (decision D1) or not. Since a user input happened, the vehicle airbag system selects (step E3) the airbag module configuration corresponding to the value of the correction.

Here, the airbag system selects a configuration in which the airbag module 13 is deactivated, in order to avoid injuries caused by the airbag to the child.

If the user had not input a correction command (for instance because the user had confirmed the classification resulting from the algorithm as mentioned above), the airbag system would have selected (step E4) another airbag module configuration.

Then, the computing unit 9 determines if the information used as a basis for the selection of the airbag module configuration may constitute a training data, that is to say if this information may be helpful for training the classification algorithm. In this case, since a correction has been made, the correction command constitutes a training data. A training of the algorithm is performed on the basis of the correction command (step E5). The determination if the information may constitute a training data involves, for example, the execution of a machine learning or deep learning algorithm implementing an automatic validation or an importance sampling method.

In a case where no correction input is entered via the command input, the system determines if the information constitutes a training data.

If no information helpful for training is detected, nothing happens, and the process ends (step E6).

Then, during a last step E6, the algorithm is updated with the result of the training. Therefore, the ability of the algorithm to classify correctly the current configuration of the front passenger is improved, and the probability for the classification unit to repeat the same misclassification is reduced.

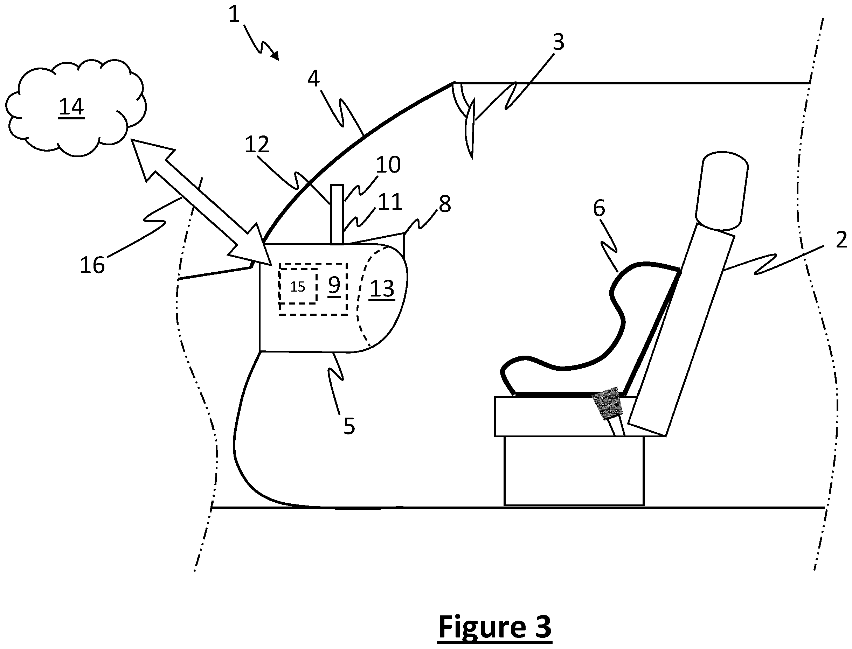

According to another embodiment shown in figure 3, the airbag system comprises a remote server 14, and the vehicle 1 is equipped with a radio communication interface 15 configured to establish a communication channel 16 with the remote server 14. For instance, the communication channel comprises a relay antenna.

For instance here, the computing unit 9 comprises and controls the radiocommunication interface 15.

In this embodiment, the computing unit 9 is configured to send data, among other the training data, to the remote server 14 via the interface 15 and the communication channel 16, and the remote server 14 is configured to train remotely the algorithm and to send back the result of the training to the computing unit 9.

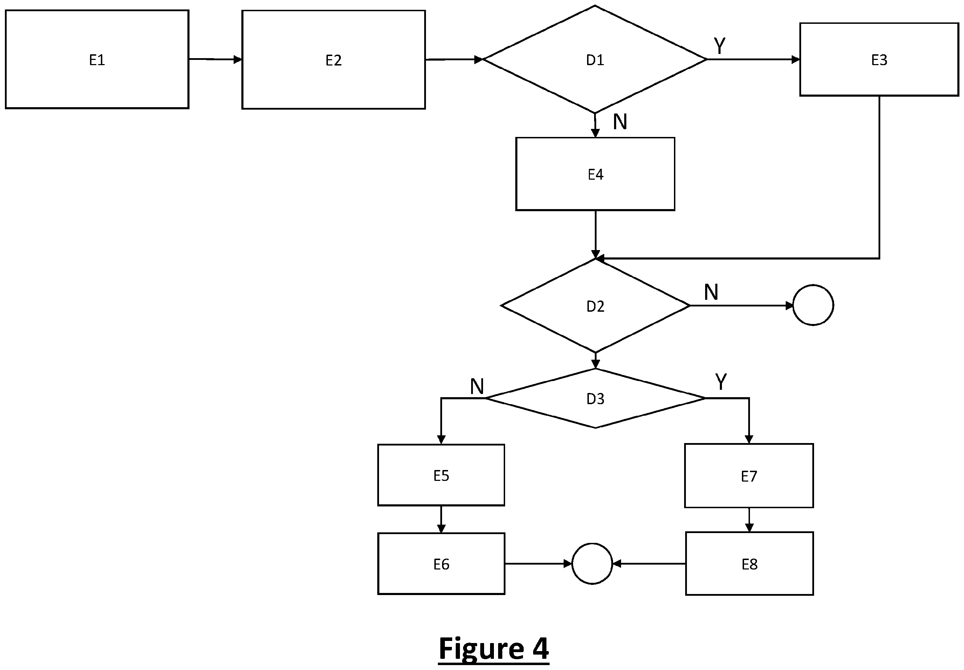

Figure 4 is a flowchart illustrating a process implemented by the airbag system according to this embodiment. In this embodiment, steps E1 to E4 and decisions D1 and D2 are performed according to what have been previously described in connection with figure 2.

The process according to this embodiment differs from the previously described process of figure 2 in that after having determined whether the information used as a basis for the selection of the airbag module configuration may constitute a training data or not (decision D2), the system determines if a connection to the remote server is available or not (decision D3).

If the connection is available, or in other terms if the communication channel 16 is established, the data is sent to the remote server 14 and the remote server 14 perform the training (step E7). After having performed the training, the training data are sent to the computing unit 9 and the algorithm is updated (step E7).

If no connection to the remote server 14 is available, for instance if the radio communication interface is deactivated, the remote server 14 is down or if the vehicle 1 is out of range from any relay antenna, the training is performed offline according to the steps E5 and E6 previously described in connection with figure 2.

The invention is not limited to the embodiments described above. Thus, although a classification unit comprising a sensor being a image capture device has been described, the classification unit may comprise any other type of sensor, for example a weight sensor placed under the front passenger seat 12, a seatbelt sensor for detecting the correct engagement of the seat belt, a time-of-flight camera or a millimetre-wave radar sensor.

In addition, the classification unit 7 may include several sensors, for instance several sensors of different types, and the classification may be performed based on several sensors output value.

A remote update of the vehicle 1 from the remote server has been described above. In other embodiments, the system may be configured to update one or more other vehicles based on the data received from the vehicle 1.

The described command input unit 10 and message output unit 11 are not limited to the embodiments described. For example, the command input unit 10 may be a physical keyboard. Also, the invention is compatible with a command input unit configured to receive voice commands, e.g. a microphone, and a message output unit configured to reproduce audio messages, e.g. a loudspeaker.

Finally, the invention applies advantageously to child seat restraining system, but is compatible for the classification of any type of object or person, placed on the front passenger seat or, providing the sensors are placed in an appropriate manner, at any location in the vehicle.

## Claims

1. Process for configuring a vehicle airbag module (13) comprising:
- an implementation of an algorithm for classifying an occupation of a seat (2) of the vehicle (1) based on at least one sensor (8) output value,
- an emission of a message comprising information about the result of the classification,
- a possible correction of the result of the classification by user input,
- a configuration of the airbag module (13) either according to the result of the classification or according to the corrected result of the classification,
- a training of the algorithm based on the at least one sensor output value and on the correction.

2. Process according to claim 1, comprising sending the at least one sensor (8) output value and the correction to a remote server (14), said training being implemented on said remote server (14).

3. Process according to claim 2, comprising a remote update of the algorithm by the remote server (14).

4. Process according to claim 3, comprising remote updates of algorithms of airbag modules of at least another vehicle.

5. Process according to any of claims 1 to 4, in which said possible correction comprises the reception of a vocal command.

6. Process according to any of claims 1 to 5, in which said message is an audio message or a visual message.

7. Process according to any of claims 1 to 6, in which the sensor output value comprises an output value of at least one sensor chosen among: an image capture apparatus, a weight sensor, a seatbelt sensor, a time-of-flight camera or a millimetre-wave radar sensor.

8. Process according to any of claims 1 to 7, in which the classification comprises the classification of a child restraining system (6) on the seat.

9. Vehicle airbag system comprising an airbag module (13) and
- a classification unit (7) comprising at least one sensor (8) and a computing unit (9) configured to implement an algorithm to classify an occupation of a seat (2) of the vehicle based on an output value of the at least one sensor (8),
- a message output unit (11) configured to emit a message comprising information about the result of the classification,
- a command input unit (10) configured to receive a correction command for correcting the result of the classification,
said system being configured to select a configuration for the airbag module (13) either according to the result of the classification or according to the corrected result of the classification, and to train the classification algorithm based on the at least one sensor (8) output value and on the correction.

10. System according to claim 9, comprising a remote server (14) configured to train the detection algorithm, the system being configured to send the at least one sensor output value and the correction to the remote server (14).

11. System according to claim 10, configured to update algorithm of airbag systems of at least another vehicle with said training.

12. System according to any of claims 9 to 11, configured to correct said result based on a vocal command.

13. System according to any of claims 9 to 12, in which the command input unit (10) is a vocal command input unit.

14. System according to any of claims 9 to 13, comprising the at least one sensor (8) chosen among: an image capture apparatus, a weight sensor, a seatbelt sensor a time-of-flight camera or millimetre-wave radar sensor.

15. System according to any of claims 9 to 14, configured to classify a child restraining system (6) on the seat.
